# EUROPÄISCHE PATENTSCHRIFT

(11) **EP 2 258 637 B1**
(45) Veröffentlichungstag und Bekanntmachung des Hinweises auf die Patenterteilung: **16.07.2014**
(21) Anmeldenummer: 10005409.7
(22) Anmeldetag: 25.05.2010
(51) Int. Cl.: B65G 39/09, B65G 39/06, F16C 13/00, F16C 27/06

(54) **Lageranordnung für eine Tragrolle**
Bearing assembly for a conveying roller
Agencement du roulement d'un rouleau transporteur

(30) Priorität: 06.06.2009 DE 102009024093
(43) Veröffentlichungstag der Anmeldung: 08.12.2010
(73) Patentinhaber: Aktiebolaget SKF, 415 50 Göteborg (SE)
(72) Erfinder: Kamm, Sandra, 97469 Gochsheim (DE); Pickel, Edgar, 97334 Sommerach (DE); Horling, Peter, 97453 Schonungen (DE); Olschewski, Armin, 97422 Schweinfurt (DE)
(74) Vertreter: Schonecke, Mitja

(56) Entgegenhaltungen:
- DE-A1- 10 303 981
- DE-A1-102007 060 968
- GB-A- 1 589 904
- JP-A- 5 237 960
- US-A- 3 097 022
- US-A- 5 868 503

## Beschreibung

Die Erfindung betrifft eine Lageranordnung für eine zumindest abschnittsweise hohlzylindrisch ausgebildete Tragrolle, mit mindestens einem einen Tragrollenmantel lagernden Lager, wobei zwischen einem Ring des Lagers und dem Tragrollenmantel direkt oder indirekt eine Dämpfungsschicht angeordnet ist, wobei die Auflagefläche für die Dämpfungsschicht im radial inneren und/oder radial äußeren Bereich der Dämpfungsschicht im Radialschnitt über eine definierte axiale Erstreckung unter einem Winkel zur Achse der Lageranordnung verläuft.

Für die Lagerung von Tragrollen sind im Stand der Technik diverse Möglichkeiten bekannt, die die spezielle Ausgestaltung mit einschließen, zwecks verbesserter Dämpfung eine Schicht Dämpfungsmaterial zwischen dem Tragrollenmantel und dem zumeist als Wälzlager ausgeführten Lager anzuordnen.

Die DE 10 2007 060 986 A1 offenbart eine gattungsgemäße Lageranordnung. Ähnliche Lösungen zeigen die US 3 097 022 A**,** die GB 1 589 904 A**,** die US 5 868 503 A**,** die JP 5 237 960 A und die DE 103 03 981 A1**.** Die DE 1 738 837 U offenbart eine weitere Lageranordnung. Hier kommt eine elastomere Dämpfungsschicht zum Einsatz, die im Radialschnitt blockförmig ausgebildet ist und in ihren beiden axialen Endbereichen Einschnürungen aufweist. Mit dieser Dämpfungsschicht kann ein hohes Dämpfungsvermögen der Lageranordnung erzielt werden. Eine ähnliche Lösung ist aus der GB 592 043 A bekannt.

Die DE 28 01 879 A1 zeigt eine weitere ähnliche Lageranordnung, wobei das Lager über eine elastomere Zwischenschicht eine Hülse trägt. Die Hülse verbreitert sich in einem axialen Endbereich radial und ist mit ihrem radial äußeren Bereich an der zylindrischen Innenfläche des Tragrollenmantels angeschweißt.

Älmliche Lageranordnungen zur gedämpften Lagerung einer Tragrolle sind aus der AT 215 887**,** aus der DE 24 00 701 A1 und aus der US 3 362 760 bekannt.

Es hat sich herausgestellt, dass die Haltbarkeit und Festigkeit der Lageranordnung mitunter unzulässig durch die mangelnde Stabilität des Dämpfungsmaterials begrenzt ist. Demgemäß kann Bauteilversagen auftreten, weil die Dämpfungsschicht im Laufe der Einsatzdauer nicht mehr in der Lage ist, die radialen und axialen Kräfte zu übertragen.

Der Erfindung liegt daher die **Aufgabe** zu Grunde, eine Lageranordnung der eingangs genannten Art so fortzubilden, dass durch konstruktive Maßnahmen eine verbesserte Festigkeit der Materials der Dämpfungsschicht erzielt werden kann. Demgemäß soll eine höhere Stabilität der Lageranordnung erreicht werden.

Die **Lösung** dieser Aufgabe durch die Erfindung ist dadurch gekennzeichnet, dass zwischen dem Tragrollenmantel und der Dämpfungsschicht ein hülsenförmiger Körper angeordnet ist, wobei der hülsenförmige Körper in einem seiner axialen Endbereiche eine radial nach innen gerichtete Kröpfung aufweist, so dass die Innenumfangsfläche des Tragrollenmantels nach Einpressen des hülsenförmigen Körpers eine entsprechende radiale Aufweitung aufweist, die sich nicht bis zum axialen Ende des hülsenförmigen Körpers erstreckt.

Der Winkel beträgt dabei bevorzugt zwischen 5° und 45°, besonders bevorzugt zwischen 10° und 35°.

Die unter Winkel angeordnete Auflagefläche kann generell mit einer beliebigen Außenkontur versehen sein, wobei sich als Spezialfall eine kegelförmige Ausgestaltung gewährt hat.

Zwischen dem einen Ring des Lagers und der Dämpfungsschicht ist bevorzugt ein Trägerkörper angeordnet.

Unter dem Winkel verlaufende Auflageflächen können nur in den seitlichen Randbereichen des einen Rings des Lagers oder des Trägerkörpers angeordnet sein. Bevorzugt ist in diesem Falle zwischen den beiden unter dem Winkel verlaufenden Auflageflächen eine zylindrische Auflagefläche vorhanden.

Alternativ ist es aber auch möglich, dass zwei unter dem Winkel verlaufende Auflageflächen von den seitlichen Randbereichen des einen Rings des Lagers oder des Trägerkörpers ausgehend zusammenstoßen.

Weiterhin kann alternativ vorgesehen sein, dass sich zwei unter dem Winkel verlaufende Auflageflächen an zylindrische Auflagefläche anschließen.

Die Dämpfungsschicht ist bevorzugt zwischen dem Tragrollenmantel und dem einen Ring des Lagers unter radialer Druckspannung angeordnet.

Die Dämpfungsschicht kann zwischen dem Trägerkörper und dem hülsenförmiger Körper angeordnet sein, wobei die Dämpfungsschicht mit dem Trägerkörper und/oder mit dem hülsenförmigen Körper bleibend verbunden ist. In diesem Falle kann vorgesehen sein, dass die Verbindung zwischen der Dämpfungsschicht und dem Trägerkörper und/oder zwischen der Dämpfungsschicht und dem hülsenförmigen Körper mittels Vulkanisation hergestellt ist. Die Anordnung bestehend aus Dämpfungsschicht und Trägerkörper und/oder hülsenförmigem Körper kann als Einheit verbaut sein und mit radialer Presspassung im Tragrollenmantel sitzen.

Die Dämpfungsschicht besteht bevorzugt aus Elastomermaterial, insbesondere aus Polyurethan. Sie kann aber auch aus Gummimaterial bestehen, wobei sich Nitrilkautschuk (NBR) bewährt hat.

Zwischen der Dämpfungsschicht und mindestens einem radial angrenzenden Bauteil kann ein Haftvermittler angeordnet sein.

Der hülsenförmige Körper und/oder der Trägerkörper bestehen bevorzugt aus Metall. Der hülsenförmige Körper kann aus Eisen- oder Stahlblech bestehen.

Der hülsenförmige Körper kann den Tragrollenmantel einseitig axial überragen und im axialen Endbereich des Tragrollenmantels einen sich radial nach außen erstreckenden Bund aufweisen.

Der hülsenförmige Körper kann mit Presspassung in dem Tragrollenmantel angeordnet sein.

Der Trägerkörper kann einen Bord aufweisen, der den einen Ring des Lagers axial übergreift.

Der Tragrollenmantel ist bevorzugt als Rohr konstanter Wanddicke ausgebildet, das in beiden axialen Endbereichen mit je einem Lager gelagert ist.

Der hülsenförmige Körper samt Dämpfungsschicht, gegebenenfalls Trägerkörper und Lager können als Einheit ausgeführt sein, die als solche an der Förderanlage eingebaut wird, zu der die Tragrolle gehört. Dies hat logistische Vorteile zur Folge. Die Montage kann durch einfaches Einpressen des hülsenförmigen Körpers in den Tragrollenmantel erfolgen.

Die vorgeschlagene Lageranordnung wird bevorzugt im Tagebau eingesetzt und ist hier ein wesentlicher Bestandteil einer Tragrollenvorrichtung. Hier besteht ein hoher Bedarf an qualitativ hochwertigen und leichten Lageranordnungen, die sich durch eine hohe Lebensdauer und einen komfortablen Betrieb auszeichnen.

Durch den erfindungsgemäßen Vorschlag kann erreicht werden, dass das Material der Dämpfungsschicht insbesondere bei axialer Relativverschiebung zwischen Lager und Tragrollenmantel unter kombinierten Schub- und Druckspannungen gehalten wird, die von dem Material gut aufgenommen werden können (besser als Zugspannungen).

Kommt es zu einer axialen Relativverschiebung, hat ferner die schräg (vorzugsweise kegelförmig) angeordnete Auflagefläche für die Dämpfungsschicht den Vorteil, dass es zu einer Kompression des Materials der Dämpfungsschicht kommt, die zu einer Aufweitung des hülsenförmigen Körpers und so zu einer stabilen Spannung des Tragrollenmantels führt.

Demgemäß wird im Material des Dämpfungsschicht eine kombinierte Schub- und Druckspannung aufgebaut, die für das Material der Dämpfungsschicht vorteilhaft ist.

In der Zeichnung sind Ausführungsbeispiele der Erfindung dargestellt. Es zeigen:
- Fig. 1: den Radialschnitt durch eine Lageranordnung mit einer Tragrolle, die von einem Lager gelagert wird, gemäß einer ersten Ausfüh- rungsform der Erfindung,
- Fig. 2: die Einzelheit "X" gemäß Fig. 1,
- Fig. 3a: schematisch den Radialschnitt durch eine Lageranordnung gemäß Fig. 1, noch ohne montierten Tragrollenmantel, gemäß einer zwei- ten Ausführungsform der Erfindung,
- Fig. 3b: die Lageranordnung gemäß Fig. 3a mit montiertem Tragrollenman- tel,
- Fig. 4a: schematisch den Radialschnitt durch eine Lageranordnung gemäß Fig. 1, noch ohne montierten Tragrollenmantel, gemäß einer dritten Ausführungsform der Erfindung,
- Fig. 4b: die Lageranordnung gemäß Fig. 4a mit montiertem Tragrollenman- tel,
- Fig. 5a: schematisch den Radialschnitt durch eine Lageranordnung gemäß Fig. 1, noch ohne montierten Tragrollenmantel, gemäß einer vierten Ausführungsform der Erfindung,
- Fig. 5b: die Lageranordnung gemäß Fig. 5a mit montiertem Tragrollenman- tel,
- Fig. 6a: schematisch den Radialschnitt durch eine Lageranordnung gemäß Fig. 1, noch ohne montierten Tragrollenmantel, gemäß einer fünften Ausführungsform der Erfindung,
- Fig. 6b: die Lageranordnung gemäß Fig. 6a mit montiertem Tragrollenman- tel.

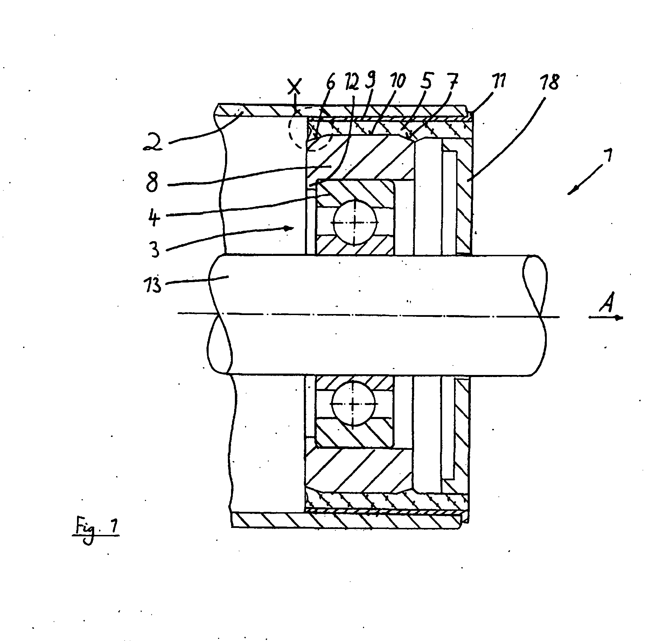

In Fig. 1 ist eine Lageranordnung 1 zu sehen, die dazu dient, einen Tragrollenmantel 2 einer Fördereinrichtung zu lagern. Die Lageranordnung 1 hat eine Achse A. Die gesamte Anordnung, die in Fig. 1 dargestellt ist, kann als Tragrolle angesprochen werden. Dargestellt ist eine Welle 13, auf der ein Rillenkugellager 3 festgelegt ist. Der Außenring 4 des Rillenkugellagers 3 trägt einen Trägerkörper 8, der einen einseitigen Bord 12 aufweist, der den Außenring 4 axial umgreift und für ihn eine axiale Anlage bildet. Das Lager 3 ist mit nicht näher dargestellten Mitteln relativ zur Welle 13 und das Lager 3 relativ zum Trägerkörper 8 axial festgelegt.

Der Tragrollenmantel 2 ist als hohlzylindrisches Bauteil, also als Rohr, ausgebildet, wobei in beiden axialen Endbereichen eine Lageranordnung 1 angeordnet ist, wie sie in Fig. 1 zu sehen ist. In die nach innen gerichtete Oberfläche des Tragrollenmantels 2 ist ein hülsenförmiger Körper 9 eingepresst, der mit Presspassung in dem Tragrollenmantel 2 sitzt. Zwischen dem hülsenförmigen Körper 9 und dem Trägerkörper 8 ist eine Dämpfungsschicht 5 aus Elastomer- oder Gummimaterial angeordnet, die vorliegend als im wesentlichen hohlzylindrische Schicht ausgeführt ist. Das Elastomer- bzw. Gummimaterial kann mit dem hülsenförmigen Körper 9 und/oder mit dem Trägerkörper 8 durch einen Spritzgießprozess oder durch einen Vulkanisationsprozess direkt verbunden sein.

In einem axialen Abschnittsbereich des Tragrollenmantels 2 zwischen der inneren zylindrischen Oberfläche des Tragrollenmantels 2 und der Dämpfungsschicht 5 ist der hülsenförmige Körper 9 angeordnet, der den Tragrollenmantel 2 einseitig axial überragt und im axialen Endbereich des Tragrollenmantels 2 einen sich radial nach außen erstreckenden Bund 11 aufweist. Dieser Bund 11 kann auch als Auskragung angesprochen werden und bildet einen definierten axialen Anschlag für den Tragrollemnantel 2. Eine axiale Fixierung des Tragrollenmantels 2 relativ zum hülsenförmigen Körper 9 ist damit in einfacher Weise möglich.

Infolge des Anspritzens bzw. des Vulkanisierens der Dämpfungsschicht 5 können neben radialen Kräften auch axiale Kräfte über die Dämpfungsschicht 5 und damit zwischen Lager 3 und Tragrollenmantel 2 übertragen werden.

Als Material für die Dämpfungsschicht kommen elastomere Materialien sowie Gummi-Materialien in Frage. Möglich ist insbesondere der Einsatz von Nitrilkautschuk, d. h. eines Synthesekautschuks. Dessen Kurzbezeichnung NBR ist von der Bezeichnung Nitrile Butadiene Rubber abgeleitet. Er wird durch Copolymerisation von Acrylnitril und Butadien gewonnen.

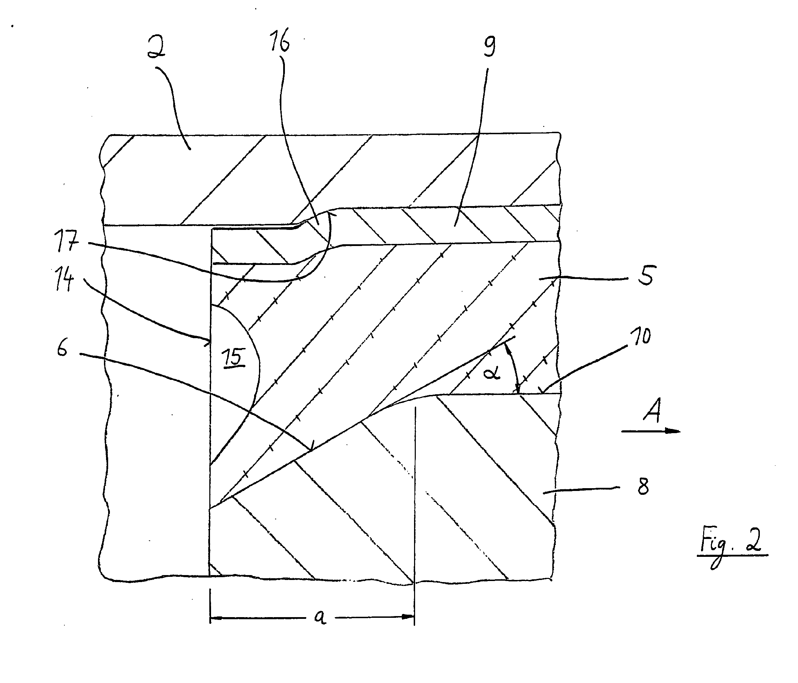

Wesentlich ist, dass - wie es im Detail in Fig. 2 zu sehen ist - die sich im seitlichen Endbereich des Trägerkörpers 8 befindlichen Auflageflächen 6 und 7 für die Dämpfungsschicht 5 am Außenumfang des Trägerkörpers 8 im Radialschnitt über eine definierte axiale Erstreckung a unter einem Winkel α zur Achse A der Lageranordnung 1 verläuft. Der Winkel α beträgt im Ausführungsbeispiel ca. 30°.

Generell gesprochen, ist vorgesehen, dass die Auflagefläche 6, 7 für die Dämpfungsschicht 5 im radial inneren und/oder radial äußeren Bereich der Dämpfungsschicht 5 im Radialschnitt über eine definierte axiale Erstreckung a unter dem Winkel α zur Achse A der Lageranordnung 1 verläuft. Demgemäß kann die mindestens eine schräg unter dem Winkel α angeordnete Auflagefläche alternativ oder additiv auch radial außen im Bereich des hülsenförmigen Körpers 9 oder des Tragrollenmantels 2 angeordnet sein.

Die Dämpfungsschicht 5 reicht im Ausführungsbeispiel nach Fig. 1 axial über die Erstreckung des Trägerkörpers 8 hinaus (in Fig. 1 nach rechts), um dort eine Halterung für einen Deckel 18 zu bilden.

In Fig. 2 sind für die vergrößerte Ansicht "X" gemäß Fig. 1 die Verhältnisse dargestellt. Angestrebt ist, dass das Material der Dämpfungsschicht 5 im seitlichen Bereich im montierten Zustand eine ebene Stirnseite 14 bildet, wenngleich in Fig. 2 eine kontraktionsbedinge ringnutförmige Einschnürung 15 vorhanden ist.

Bei der Lösung gemäß Fig. 1 und Fig. 2 ist im Übrigen vorgesehen, dass der hülsenförmige Körper 9 im axialen Endbereich eine Kröpfung 16 aufweist, wodurch die Innenumfangsfläche des Tragrollenmantels 2 nach Einpressen des hülsenförmigen Körpers 9 eine entsprechende Aufweitung 17 aufweist. Es hat sich erwiesen, dass besonders günstige Ergebnisse erzielt werden können, wenn die axiale Erstreckung a (s. Fig. 2) zwischen 5 % und 15 % der Breite des Trägerkörpers 8 (gemessen in axiale Richtung) beträgt und wenn der Winkel α zwischen 10° und 35° beträgt. Die Wahl dieser Größenordnungen führt in vorteilhafter Weise zu günstigen kombinierten radialen und axialen Spannungen im Material der Dämpfungsschicht (kombinierte Schub- und Druckspannungen), was zu einer hohen Gebrauchsdauer führt.

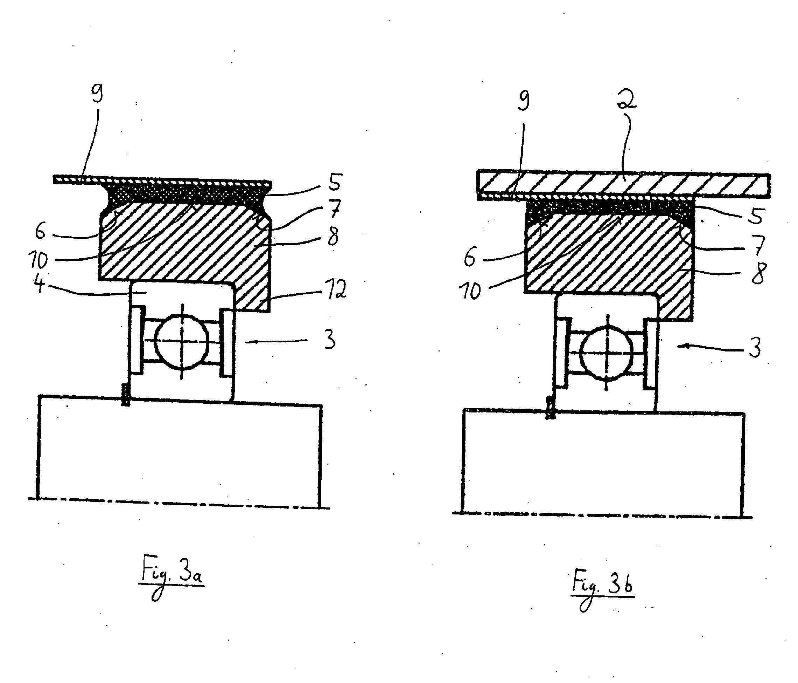

In den Figuren 3, 4, 5 und 6 sind vier weitere alternative Ausgestaltungen der Erfindung skizziert. Zu sehen sind jeweilige Radialschnitte durch die Lageranordnung. Dabei stellen die Figuren 3a, 4a, 5a und 6a jeweils eine vormontierte Einheit dar, die noch nicht in den Tragrollenmantel 2 eingebaut ist. Wird die in diesen Figuren dargestellte Einheit in die Tragrolle 2 axial eingepresst, ergibt sich die Anordnung, die in den Figuren 3b, 4b, 5b und 6b skizziert ist. Der Vergleich der korrespondierenden Figuren zeigt, dass sich durch den Einpressvorgang im Material der Dämpfungsschicht nicht nur radiale Spannungen aufbauen, sondern dass hierdurch auch zu Verformungen der Dämpfungsschicht kommt (vergleiche die jeweiligen stirnseitigen Konturen der Dämpfungsschicht).

Bei der Lösung gemäß Fig. 3 ist eine Ausbildung gewählt, die derjenigen gemäß Fig. 1 entspricht. Demgemäß weist der Trägerkörper 6 in beiden axialen Endbereichen je eine Auflagefläche 6, 7 für die Dämpfungsschicht 5 auf, die über eine zylindrische Auflagefläche 10 miteinander verbunden sind.

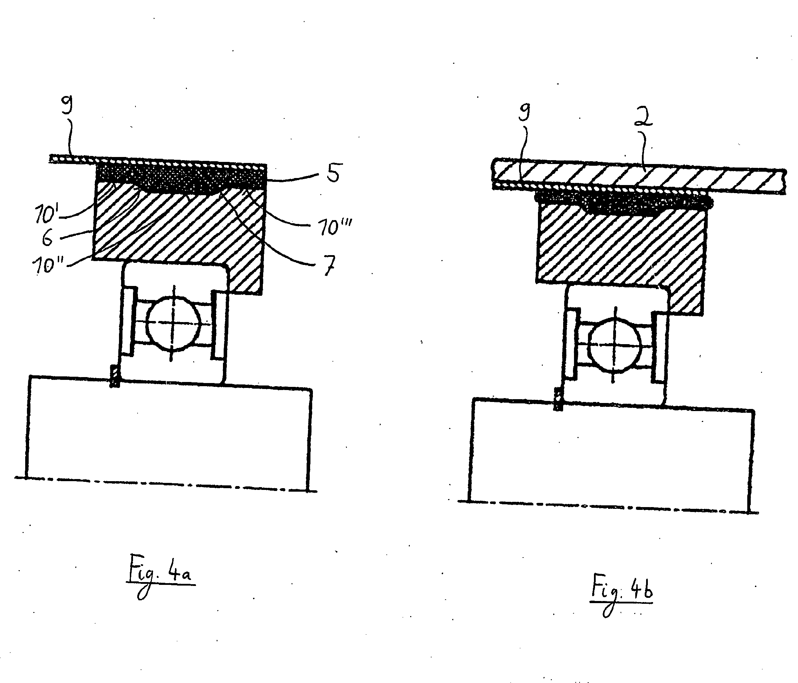

Bei der Lösung gemäß Fig. 4 sind insgesamt drei zylindrische Auflageflächen 10', 10" und 10"' vorgesehen, die radial gegeneinander versetzt sind. Die beiden zylindrischen Auflageflächen 10' und 10" sind über die kegelförmig ausgebildete Auflagefläche 6 miteinander verbunden. Entsprechend sind die beiden zylindrischen Auflageflächen 10" und 10"' über die kegelförmig ausgebildete Auflagefläche 7 miteinander verbunden.

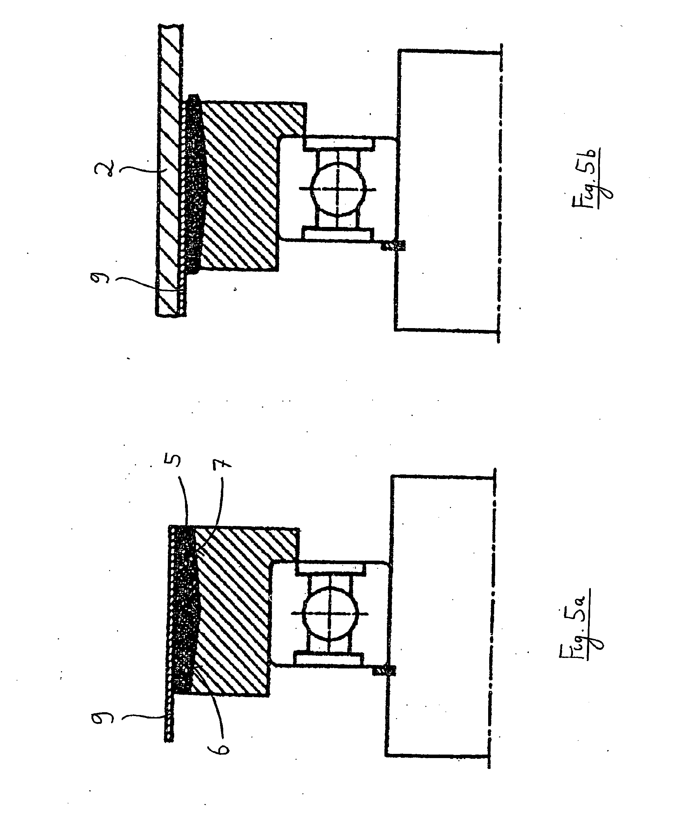

Bei der Ausführungsform gemäß Fig. 5 sind zwei Auflageflächen 6 und 7 vorgesehen, die jeweils kegelförmig ausgeführt sind und die etwa in der Mitte des Trägerkörpers 8 zusammentreffen.

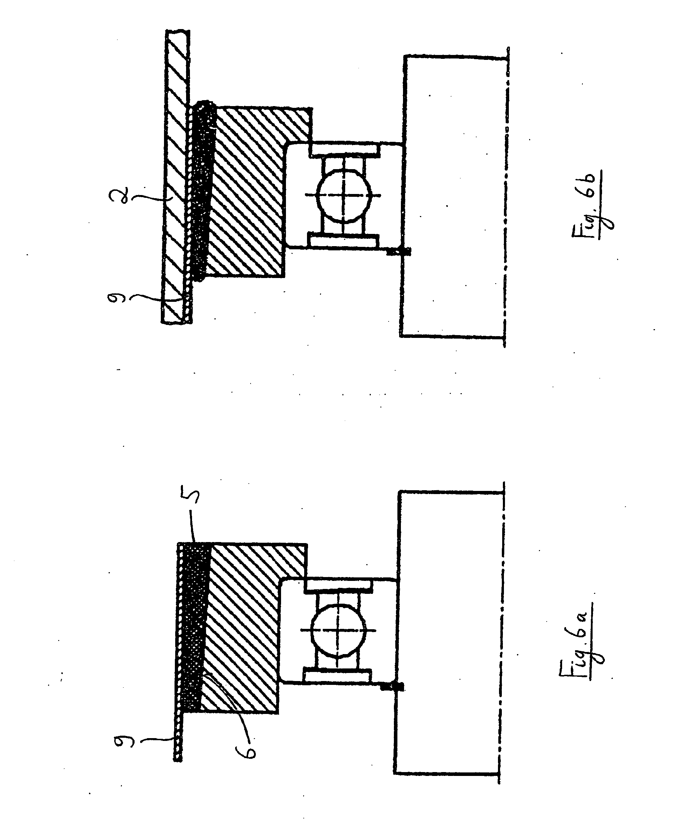

Indes ist bei der Ausgestaltung gemäß Fig. 6 vorgesehen, dass nur eine einzige kegelförmige Auflagefläche 6 für die Dämpfungsschicht 5 vorhanden ist, die sich über die gesamte Breite des Trägerkörpers 8 erstreckt.

### Bezugszeichenliste

- 1: Lageranordnung
- 2: Tragrollenmantel
- 3: Lager (Wälzlager)
- 4: Lagerring
- 5: Dämpfungsschicht
- 6: Auflagefläche
- 7: Auflagefläche
- 8: Trägerkörper
- 9: hülsenförmiger Körper
- 10: zylindrische Auflagefläche
- 10': zylindrische Auflagefläche
- 10": zylindrische Auflagefläche
- 10"': zylindrische Auflagefläche
- 11: Bund
- 12: Bord
- 13: Welle
- 14: Stirnseite
- 15: Einschnürung
- 16: Kröpfung
- 17: Aufweitung
- 18: Deckel

- a: axiale Erstreckung
- α: Winkel
- A: Achse der Lageranordnung

## Patentansprüche

1. Lageranordnung (1) für eine zumindest abschnittsweise hohlzylindrisch ausgebildete Tragrolle, mit mindestens einem einen Tragrollenmantel (2) lagernden Lager (3), wobei zwischen einem Ring (4) des Lagers (3) und dem Tragrollenmantel (2) direkt oder indirekt eine Dämpfungsschicht (5) angeordnet ist, wobei die Auflagefläche (6, 7) für die Dämpfungsschicht (5) im radial inneren und/oder radial äußeren Bereich der Dämpfungsschicht (5) im Radialschnitt über eine definierte axiale Erstreckung (a) unter einem Winkel (α) zur Achse (A) der Lageranordnung (1) verläuft,
**dadurch gekennzeichnet, dass**
zwischen dem Tragrollenmantel (2) und der Dämpfungsschicht (5) ein hülsenförmiger Körper (9) angeordnet ist, wobei der hülsenförmige Körper (9) in einem seiner axialen Endbereiche eine radial nach innen gerichtete Kröpfung (16) aufweist, so dass die Innenumfangsfläche des Tragrollenmantels (2) nach Einpressen des hülsenförmigen Körpers (9) eine entsprechende radiale Aufweitung (17) aufweist, die sich nicht bis zum axialen Ende des hülsenförmigen Körpers (9) erstreckt.

2. Lageranordnung nach Anspruch 1, **dadurch gekennzeichnet, dass** der Winkel (α) zwischen 5° und 45° beträgt, vorzugsweise zwischen 10° und 35°.

3. Lageranordnung nach Anspruch 1 oder 2, **dadurch gekennzeichnet, dass** die Auflagefläche (6, 7) zumindest abschnittsweise kegelförmig ausgebildet ist.

4. Lageranordnung nach einem der Ansprüche 1 bis 3, **dadurch gekennzeichnet, dass** zwischen dem einen Ring (4) des Lagers (3) und der Dämpfungsschicht (5) ein Trägerkörper (8) angeordnet ist.

5. Lageranordnung nach einem der Ansprüche 1 bis 4, **dadurch gekennzeichnet, dass** unter dem Winkel (α) verlaufende Auflageflächen (6, 7) nur in den seitlichen Randbereichen des einen Rings (4) des Lagers (3) oder des Trägerkörpers (8) angeordnet sind.

6. Lageranordnung nach Anspruch 5, **dadurch gekennzeichnet, dass** zwischen den beiden unter dem Winkel (α) verlaufenden Auflageflächen (6, 7) eine zylindrische Auflagefläche (10) vorhanden ist.

7. Lageranordnung nach einem der Ansprüche 1 bis 4, **dadurch gekennzeichnet, dass** zwei unter dem Winkel (α) verlaufende Auflageflächen (6, 7) von den seitlichen Randbereichen des einen Rings (4) des Lagers (3) oder des Trägerkörpers (8) ausgehend zusammenstoßen.

8. Lageranordnung nach einem der Ansprüche 1 bis 4, **dadurch gekennzeichnet, dass** sich zwei unter dem Winkel (α) verlaufende Auflageflächen (6, 7) an zylindrische Auflagefläche (10', 10", 10"') anschließen.

9. Lageranordnung nach einem der Ansprüche 1 bis 8, **dadurch gekennzeichnet, dass** die Dämpfungsschicht (5) zwischen dem Tragrollenmantel (2) und dem einen Ring (4) des Lagers (3) unter radialer Druckspannung angeordnet ist.

10. Lageranordnung nach einem der Ansprüche 1 bis 9, **dadurch gekennzeichnet, dass** die Dämpfungsschicht (5) aus Elastomermaterial besteht, vorzugsweise aus Polyurethan oder aus Gummimaterial, insbesondere Nitrilkautschuk (NBR).

11. Lageranordnung nach einem der Ansprüche 1 bis 10, **dadurch gekennzeichnet, dass** der hülsenförmige Körper (9) den Tragrollenmantel (2) einseitig axial überragt und im axialen Endbereich des Tragrollenmantels (2) einen sich radial nach außen erstreckenden Bund (11) aufweist.

12. Lageranordnung nach einem der Ansprüche 1 bis 11, **dadurch gekennzeichnet, dass** der hülsenförmige Körper (9) mit Presspassung in dem Tragrollenmantel (2) angeordnet ist.

13. Lageranordnung nach einem der Ansprüche 4 bis 12, **dadurch gekennzeichnet, dass** der Trägerkörper (8) einen Bord (12) aufweist, der den einen Ring (4) des Lagers (3) axial übergreift.

14. Lageranordnung nach einem der Ansprüche 1 bis 13, **dadurch gekennzeichnet, dass** der Tragrollenmantel (2) als Rohr konstanter Wanddicke ausgebildet ist, das in beiden axialen Endbereichen mit je einem Lager (3) gelagert ist.

## Claims

1. Bearing arrangement (1) for a load-bearing roller which is of hollow-cylindrical configuration at least in sections, having at least one bearing (3) which mounts a load-bearing roller shell (2), a damping layer (5) being arranged directly or indirectly between a ring (4) of the bearing (3) and the load-bearing roller shell (2), the supporting face (6, 7) for the damping layer (5) running in the radial inner and/or radial outer region of the damping layer (5) in radial section over a defined axial extent (a) at an angle (α) with respect to the axis (A) of the bearing arrangement (1), **characterized in that** a sleeve-shaped body (9) is arranged between the load-bearing roller shell (2) and the damping layer (5), the sleeve-shaped body (9) having a radially inwardly directed offset (16) in one of its axial end regions, with the result that, after the sleeve-shaped body (9) is pressed in, the inner circumferential face of the load-bearing roller shell (2) has a corresponding radial widened portion (17) which does not extend as far as to the axial end of the sleeve-shaped body (9).

2. Bearing arrangement according to Claim 1, **characterized in that** the angle (α) is between 5° and 45°, preferably between 10° and 35°.

3. Bearing arrangement according to Claim 1 or 2, **characterized in that** the supporting face (6, 7) is of conical configuration at least in sections.

4. Bearing arrangement according to one of Claims 1 to 3, **characterized in that** a carrier body (8) is arranged between the one ring (4) of the bearing (3) and the damping layer (5).

5. Bearing arrangement according to one of Claims 1 to 4, **characterized in that** supporting faces (6, 7) which run at the angle (α) are arranged only in the lateral edge regions of the one ring (4) of the bearing (3) or the carrier body (8).

6. Bearing arrangement according to Claim 5, **characterized in that** there is a cylindrical supporting face (10) between the two supporting faces (6, 7) which run at the angle (α).

7. Bearing arrangement according to one of Claims 1 to 4, **characterized in that** two supporting faces (6, 7) which run at the angle (α) abut, starting from the lateral edge regions of the one ring (4) of the bearing (3) or the carrier body (8).

8. Bearing arrangement according to one of Claims 1 to 4, **characterized in that** two supporting faces (6, 7) which run at the angle (α) adjoin cylindrical supporting faces (10', 10", 10''').

9. Bearing arrangement according to one of Claims 1 to 8, **characterized in that** the damping layer (5) is arranged under radial compressive stress between the load-bearing roller shell (2) and the one ring (4) of the bearing (3).

10. Bearing arrangement according to one of Claims 1 to 9, **characterized in that** the damping layer (5) is composed of elastomeric material, preferably of polyurethane or of rubber material, in particular nitrile rubber (NBR).

11. Bearing arrangement according to one of Claims 1 to 10, **characterized in that** the sleeve-shaped body (9) protrudes beyond the load-bearing roller shell (2) axially on one side and has a radially outwardly extending shoulder (11) in the axial end region of the load-bearing roller shell (2).

12. Bearing arrangement according to one of Claims 1 to 11, **characterized in that** the sleeve-shaped body (9) is arranged in the load-bearing roller shell (2) with an interference fit.

13. Bearing arrangement according to one of Claims 4 to 12, **characterized in that** the carrier body (8) has a rim (12) which engages axially over the one ring (4) of the bearing (3).

14. Bearing arrangement according to one of Claims 1 to 13, **characterized in that** the load-bearing roller shell (2) is configured as a tube of constant wall thickness which is mounted in both axial end regions by way of in each case one bearing (3).

## Revendications

1. Ensemble de palier (1) pour un rouleau porteur réalisé au moins en partie sous forme cylindrique creuse, comprenant au moins un palier (3) supportant une enveloppe de rouleau porteur (2), une couche d'amortissement (5) étant disposée directement ou indirectement entre une bague (4) du palier (3) et l'enveloppe de rouleau porteur (2), la surface d'appui (6, 7) pour la couche d'amortissement (5) s'étendant, dans la région radialement intérieure et/ou radialement extérieure de la couche d'amortissement (5), en coupe radiale, sur une étendue axiale (a) définie suivant un angle (α) par rapport à l'axe (A) de l'ensemble de palier (1),
**caractérisé en ce**
**qu'**un corps en forme de douille (9) est disposé entre l'enveloppe de rouleau porteur (2) et la couche d'amortissement (5), le corps en forme de douille (9) comprenant, dans l'une de ses régions d'extrémité axiales, un coude (16) orienté radialement vers l'intérieur, de telle sorte que la surface périphérique intérieure de l'enveloppe de rouleau porteur (2) présente un élargissement (17) radial correspondant après l'enfoncement du corps en forme de douille (9), lequel élargissement ne s'étend pas jusqu'à l'extrémité axiale du corps en forme de douille (9).

2. Ensemble de palier selon la revendication 1, **caractérisé en ce que** l'angle (α) vaut entre 5° et 45°, de préférence entre 10° et 35°.

3. Ensemble de palier selon la revendication 1 ou 2, **caractérisé en ce que** la surface d'appui (6, 7) est réalisée, au moins par sections, de manière conique.

4. Ensemble de palier selon l'une quelconque des revendications 1 à 3, **caractérisé en ce qu'**un corps de support (8) est disposé entre l'une des bagues (4) du palier (3) et la couche d'amortissement (5).

5. Ensemble de palier selon l'une quelconque des revendications 1 à 4, **caractérisé en ce que** des surfaces d'appui (6, 7) s'étendant suivant l'angle (α) ne sont disposées que dans les régions de bord latérales de l'une des bagues (4) du palier (3) ou du corps de support (8).

6. Ensemble de palier selon la revendication 5, **caractérisé en ce qu'**une surface d'appui (10) cylindrique est présente entre les deux surfaces d'appui (6, 7) s'étendant suivant l'angle (α).

7. Ensemble de palier selon l'une quelconque des revendications 1 à 4, **caractérisé en ce que** deux surfaces d'appui (6, 7) s'étendant suivant l'angle (α) s'aboutent à partir des régions de bord latérales de l'une des bagues (4) du palier (3) ou du corps de support (8).

8. Ensemble de palier selon l'une quelconque des revendications 1 à 4, **caractérisé en ce que** deux surfaces d'appui (6, 7) s'étendant suivant l'angle (α) se raccordent à des surfaces d'appui (10', 10'', 10''') cylindriques.

9. Ensemble de palier selon l'une quelconque des revendications 1 à 8, **caractérisé en ce que** la couche d'amortissement (5) est disposée sous une contrainte de compression radiale entre l'enveloppe de rouleau porteur (2) et l'une des bagues (4) du palier (3).

10. Ensemble de palier selon l'une quelconque des revendications 1 à 9, **caractérisé en ce que** la couche d'amortissement (5) est constituée d'un matériau élastomère, de préférence de polyuréthane ou de matériau en caoutchouc, en particulier de caoutchouc nitrile (NBR).

11. Ensemble de palier selon l'une quelconque des revendications 1 à 10, **caractérisé en ce que** le corps en forme de douille (9) dépasse axialement d'un côté au-delà de l'enveloppe de rouleau porteur (2) et comprend un épaulement (11) s'étendant radialement vers l'extérieur dans la région d'extrémité axiale de l'enveloppe de rouleau porteur (2).

12. Ensemble de palier selon l'une quelconque des revendications 1 à 11, **caractérisé en ce que** le corps en forme de douille (9) est disposé avec ajustement serré dans l'enveloppe de rouleau porteur (2).

13. Ensemble de palier selon l'une quelconque des revendications 4 à 12, **caractérisé en ce que** le corps de support (8) comprend un bord (12) qui vient en prise axialement par le dessus avec l'une des bagues (4) du palier (3).

14. Ensemble de palier selon l'une quelconque des revendications 1 à 13, **caractérisé en ce que** l'enveloppe de rouleau porteur (2) est réalisée sous forme de tube d'épaisseur de paroi constante, lequel est monté dans les deux régions d'extrémité axiales à l'aide d'un palier (3) respectif.
